(19) **Europäisches Patentamt / European Patent Office / Office européen des brevets**

(11) **EP 4 668 559 A1**

(12) # EUROPEAN PATENT APPLICATION

(43) Date of publication:
**24.12.2025   Bulletin 2025/52**

(21) Application number: **25181968.6**

(22) Date of filing: **11.06.2025**

(51) International Patent Classification (IPC):
**H02M 1/00** *(2006.01)*     **H02M 1/42** *(2007.01)*

(52) Cooperative Patent Classification (CPC):
**H02M 1/0009; H02M 1/0085; H02M 1/4233; H02M 1/0064**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.06.2024   US 202418745020**

(71) Applicant: **NXP USA, Inc.**
**Austin, TX 78735 (US)**

(72) Inventors:
- **Twelkemeijer, Remco**
  **5656 AG Eindhoven (NL)**
- **Strijker, Joan Wichard**
  **5656 AG Eindhoven (NL)**

(74) Representative: **Krott, Michel**
**NXP Semiconductors**
**Intellectual Property Group**
**High Tech Campus 60**
**5656 AG  Eindhoven (NL)**

(54) **CURRENT SENSING IN TOTEM POLE POWER FACTOR CORRECTION CIRCUIT**

(57)     A power factor correction (PFC) boost converter system and method of operation includes a control system connected to a bridgeless PFC converter which includes a first voltage measurement circuit connected to measure a first voltage, a second voltage measurement circuit connected to measure a second voltage, and a third voltage measurement circuit connected to measure a third voltage, where the control system is connected to compute a reconstructed PFC input current signal from the first, second, and third voltages and to output a set of control signals for controlling the PFC converter based on the reconstructed PFC input current signal and the boosted output voltage.

Figure 4

EP 4 668 559 A1

**Description**

## BACKGROUND OF THE INVENTION

### Field of the Invention

The present disclosure is directed in general to the field of electrical circuits. In one aspect, the present disclosure relates to bridgeless power factor correction converters.

### Description of the Related Art

Electric power conversion is widely used in varied applications including adjustable-speed electric motor drives, switch-mode power supplies, uninterrupted power supplies (UPSs), and battery energy storage. In various applications, two or more boost converters are often combined as multiple stages to improve the performance and reduce the size of a power converter. For example, a switched mode power supply (SMPS) can be optimized for cost and performance if the input voltage is fixed to within reasonable limits. To achieve this, a power factor correction (PFC) circuit can be inserted in front of the SMPS to supply the fixed voltage. Typically, the PFC circuit is a boost converter for supplying a higher output voltage than its input voltage. One example of a PFC circuit is a PFC boost converter with a diode bridge for rectifying an input AC voltage. In such circuits, the PFC input current can be used to control the average current of the PFC boost converter, and can readily be measured at a sense resistor connected between the PFC boost converter and diode bridge rectifier. However, the energy loss from the diodes in such PFC circuits reduces the power efficiency of the converter. To overcome this problem, totem-pole PFC circuit topologies have been proposed, but it is difficult to measure the PFC input current in such topologies. Some solutions have been proposed for measuring the PFC input current, such solutions require expensive sensors or current transformer that add to the cost and complexity. Other solutions have been proposed which use a "$t_{on}$ control" technique for discontinuous conduction mode (DCM) Quasi-Resonant (QR) operation while avoiding continuous conduction mode (CCM) operation, but these solutions reduce the power factor (PF) and total harmonic distortion (THD) performance and/or power efficiency in the case of valley switching. As seen from the foregoing, existing solutions for operating and controlling a power-efficient PFC converter are extremely difficult at a practical level by virtue of the challenges with measuring the average PFC input current in totem-pole PFC circuits while supporting all modes of operation and maintaining PF, THD and power efficiency performance. Further limitations and disadvantages of conventional processes and technologies will become apparent to one of skill in the art after reviewing the remainder of the present application with reference to the drawings and detailed description which follow.

## BRIEF DESCRIPTION OF THE DRAWINGS

The present invention may be understood, and its numerous objects, features and advantages obtained, when the following detailed description of a preferred embodiment is considered in conjunction with the following drawings.

Figure 1 depicts a schematic circuit diagram of a conventional switched mode power supply (SMPS) with a diode bridge rectifier and power factor corrector (PFC) boost converter.

Figure 2 depicts a schematic circuit diagram of a bridgeless PFC totem-pole boost converter.

Figure 3 depicts current timing diagrams for three different operational control modes of a PFC boost converter.

Figure 4 depicts a schematic circuit diagram of a PFC totem-pole boost converter with circuitry for measuring a PFC output current, an AC input voltage, and a PFC output voltage in accordance with selected embodiments of the present disclosure.

Figure 5 depicts a simplified block diagram of a control system for reconstructing the PFC input current from the measured PFC output current in accordance with selected embodiments of the present disclosure.

Figure 6 depicts a simplified schematic block diagram of a control system with circuitry for reconstructing high frequency information for the PFC input current in accordance with selected embodiments of the present disclosure.

Figure 7 depicts a simplified schematic block diagram of a control system with circuitry having a DC regulation control loop for reconstructing high frequency information for the PFC input current in accordance with selected embodiments of the present disclosure.

Figure 8 depicts a bode plot of a gain phase calculation of the PFC boost converter with a current control circuit having a DC regulation control loop in accordance with selected embodiments of the present disclosure.

Figure 9 depicts a simplified block diagram of a control system with a DC regulation control loop for reconstructing the PFC input current from the measured PFC output current in accordance with selected embodiments of the present disclosure.

## DETAILED DESCRIPTION

A totem pole bridgeless power factor correcting (PFC) boost converter and method of operation are described for reconstructing an average PFC input current from a PFC output current measurement, an AC input voltage measurement, and an output voltage measurement. In selected embodiments, the totem pole bridgeless PFC booster converter includes a PFC output current measurement circuit, an AC input voltage measurement circuit, and an output voltage measurement circuit which are connected and configured to efficiently measure the PFC output current measurement, AC input voltage measurement, and output voltage measurement. The measured PFC output current, AC input voltage, and output voltage values are provided to an integrated circuit (IC) control system which reconstructs the average PFC input current with reduced noise sensitivity and without requiring current transformers or expensive current sensors. For example, a single low-ohmic sense resistor (Rsns) may be used to measure the PFC output current. In selected embodiments, the IC control system includes an AC input voltage polarity detector and measurement circuit for determining the polarity (positive or negative) of the AC input and for calculating the output voltage (Vboost) and the PFC input voltage (Vin_pfc). In addition, the IC control system includes a first divider circuit for dividing the voltage at a sense resistor (SNSCUR pin voltage) by the value of the sense resistor (Rsns) to obtain the PFC output current (Ipfc_out). The IC control system also includes a second divider circuit for dividing the output voltage (Vboost) by the PFC input voltage to obtain the quotient value (Vout_Div_Vin_PFC). In addition, the IC control system includes a first multiplier circuit for multiplying the quotient value (Vout_Div_Vin_PFC) with the PFC output current (Ipfc_out) to obtain the reconstructed average PFC input current (Ipfc_recon_dc). In selected embodiments, the IC control system may also include a DC regulation control loop for regulating the DC current to the reconstructed average PFC input current (Ipfc_recon_dc). In addition, the IC control system may include an integrator in the DC regulation control loop which is connected to measure the high frequency (HF) part of the current by computing the integral of the voltage over the PFC inductor coil, thereby increasing the phase margin and/or bandwidth of the controller. In such embodiments, the DC regulation control loop may include one or more filters for improving noise immunity of the PFC boost converter. In addition, the IC control system includes a PFC control loop which includes a voltage loop, current loop and gate control which are connected to receive the reconstructed PFC input current value to regulate the output voltage (Vboost) to a target value.

In this disclosure, an improved current sensing circuit design, structure, and method of manufacture are described for a totem-pole PFC boost converter to address various problems in the art where various limitations and disadvantages of conventional solutions and technologies will become apparent to one of skill in the art after reviewing the remainder of the present application with reference to the drawings and detailed description provided herein. Various illustrative embodiments of the present invention will now be described in detail with reference to the accompanying figures. While various details are set forth in the following description, it will be appreciated that the present invention may be practiced without these specific details, and that numerous implementation-specific decisions may be made to the invention described herein to achieve the device designer's specific goals, such as compliance with process technology or design-related constraints, which will vary from one implementation to another. While such a development effort might be complex and time-consuming, it would nevertheless be a routine undertaking for those of ordinary skill in the art having the benefit of this disclosure. For example, selected aspects are depicted with reference to simplified schematic circuit and block diagram drawings without including every device feature or geometry in order to avoid limiting or obscuring the present invention. Such descriptions and representations are used by those skilled in the art to describe and convey the substance of their work to others skilled in the art. It is also noted that, throughout this detailed description, certain elements in the figures are illustrated for simplicity and clarity and have not necessarily been drawn to scale. Further, reference numerals have been repeated among the drawings to represent corresponding or analogous elements.

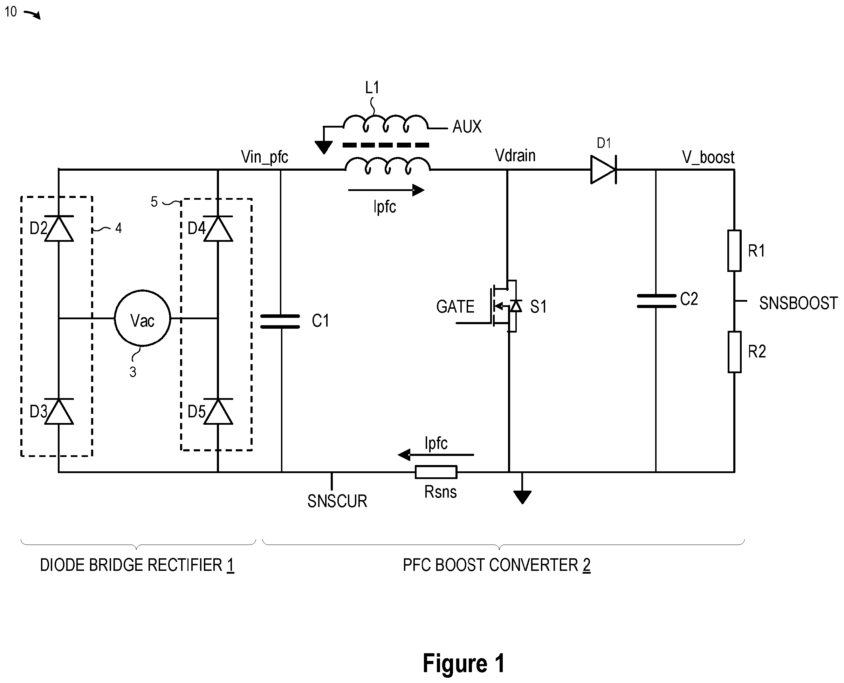

For a contextual understanding of the present disclosure, reference is now made to Figure 1 which depicts a schematic circuit diagram of a conventional switched mode power supply (SMPS) 10 with a diode bridge rectifier 1 and power factor corrector (PFC) boost converter 2. In the depicted SMPS 10, an AC input voltage 3 (a.k.a., mains input voltage) is connected to a diode bridge rectifier (BR) 1 to generate a rectified input voltage (Vin-pfc) to the PFC boost converter 2 which includes a first input capacitor (C1), a second output capacitor (C2), a switching element (S1), an inductor (L1), a rectifier diode (D1), a shunt or sense resistor (Rsns), and an output resistive divider R1, R2 connected as shown.

In particular, the diode bridge rectifier 1 includes a first bridge arm 4 and second bridge arm 5 connected to first and second terminals of the AC input voltage Vac 3. The first bridge arm 4 includes a first diode D2 and a second diode D3 connected in series between the first inductor terminal of the inductor L1 and ground, with a first middle node which is coupled to a first terminal of the AC input voltage Vac 3. In addition, the second bridge arm 5 includes a third diode D4 and a fourth diode D5 connected in series between the first inductor terminal of the inductor L1 and ground, with a second middle node which is coupled to a second terminal of the AC input voltage Vac 3. In the PFC boost converter 2, a first inductor terminal of the inductor L1 is coupled over the first input capacitor (C1) to a first sense resistor terminal of the sense resistor (Rsns). In addition, the second inductor terminal of inductor L1 is connected in series with rectifier diode (D1) to generate the output voltage (Vboost), with a first terminal of the rectifier diode (D 1) and the second inductor terminal of inductor L1 connected over the switching element (S1) to a grounded second sense resistor terminal of the sense resistor (Rsns), and with a second terminal of the rectifier diode (D1) is connected over the second output capacitor (C2) to the grounded second sense resistor terminal of the sense resistor (Rsns). In addition, the resistive divider R1, R2 is connected between the second terminal of the rectifier diode (D1) and the grounded second sense resistor terminal of the sense resistor (Rsns) to provide a measure of the output voltage (Vboost), with a shared middle node of the series-connected resistors R1, R2 providing a measure of the output voltage (Vboost).

In operation, the AC input voltage 3 supplies a voltage to the SMPS 10. The first input capacitor (C1) is a filter capacitor for electromagnetic interference (EMI). In some applications, common mode and differential mode inductors may also be present. The diode bridge rectifier 1 is employed to convert the AC input voltage 3 to a rectified input voltage (Vrect). The rectified input voltage (Vin_pfc) is used to produce an PFC input current (Ipfc), which is a switching current having a controlled switching frequency (e.g., 100 KHz). The PFC boost converter 2 acts as a power stage of the SMPS 10, and includes the first input capacitor (C1), switching element (S1), the inductor (L1), the rectifier diode (D1), and the output capacitor (C2). An output voltage (Vboost) of the PFC boost converter 2 may typically be higher than a peak of the AC input voltage 3. In some applications, the output voltage (Vboost) of the of the SMPS 10 may be connected to another SMPS (e.g., a flyback circuit or an LLC circuit).

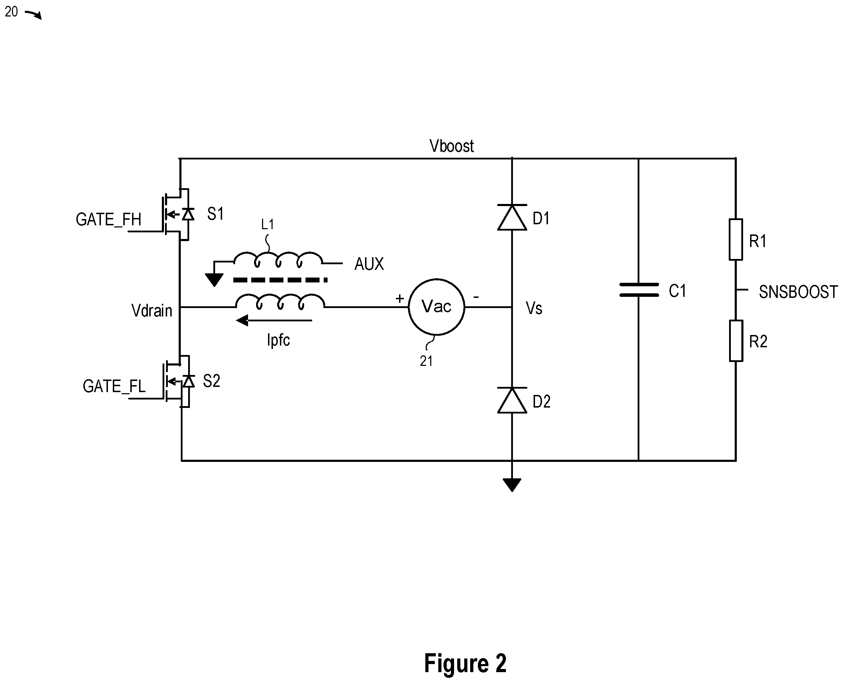

As will be appreciated, there are a variety of configurations of the switched mode power supply circuits and PFC circuit topologies that are widely used in the industry which may include other circuit elements and arrangements. For example, Figure 2 depicts a schematic circuit diagram of a bridgeless PFC totem-pole boost converter 20 which eliminates the energy losses and decreased power efficiency of the diode bridge rectifier design of the SMPS 10 depicted in Figure 1. As depicted, the bridgeless PFC totem-pole boost converter 20 includes an AC input voltage 21 (a.k.a., mains input voltage), an inductor L1, at least two series-connected switching elements (S1, S2) to control the flow of current, series-connected diodes D1, D2, a output capacitance C1, and an output resistive divider R1, R2 connected as shown. As will be appreciated, the diodes D1, D2 can be replaced with switching elements S3, S4 which act as line transistors that are turned on and off at the input line frequency to short the internal body diodes of the switching element, thereby reducing power losses even further.

In operation, the switching elements (S1, S2) are connected in series between the output voltage node (Vboost) and ground, and the diodes D1, D2 are connected in series between the output voltage node (Vboost) and ground. The inductor L1 is connected between a first terminal of the AC input voltage 21 and a shared Vdrain node between the series-connected switching elements (S1, S2). The other terminal of the AC input voltage 21 and is connected to a shared Vs node between the series-connected diodes D1, D2. The output capacitance C1 and output resistive divider R1, R2 are each connected in parallel with the series-connected switching elements (S1, S2) and the series-connected diodes D1, D2. The series-connected switching elements (S1, S2) can be any suitable switches, including MOSFETs, GaN transistors, SiC transistors, or the like. Neglecting possible synchronous rectification and/or zero voltage switching, the switching element S2 is used when the AC input voltage 3 is positive, and the switching element S1 is used when the AC input voltage 3 is negative.

Regardless of which SMPS circuit configuration is used, it should be able operate in one or more different operational modes, including a continuous conduction mode (CCM), a boundary conduction mode (BCM) mode, and a discontinuous conduction mode (DCM). In addition, the ability of the SMPS circuit to control the output voltage (Vboost) generated by the PFC boost converter requires that the cycle-by-cycle controller turn ON and OFF the converter switch based on the measured PFC input current (Ipfc) at the PFC boost converter.

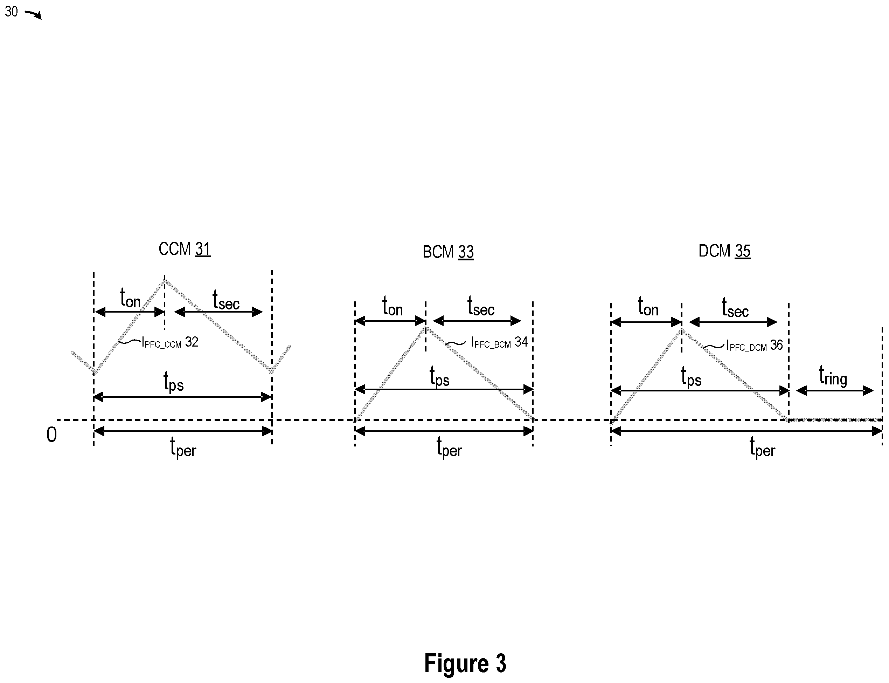

For additional contextual understanding of the different operational modes and control requirements for SMPS circuits, reference is now made to Figure 3 which graphically depicts current timing diagrams 31, 33, 35 for three different operational control modes of a PFC boost converter. In each timing diagram, the vertical axis depicts the PFC input current at the inductor of the PFC boost converter, and the horizontal axis depicts time. In the first depicted continuous conduction mode (CCM) 31, the inductor current $I_{PFC\_CCM}$ 32 never reaches zero and the converter is conducting continuously. At the start of a power phase where the inductor current $I_{PFC\_CCM}$ 32 has reached its lowest point, the cycle-by-cycle controller turns the gate of the converter switch 6 to ON for the duration $t_{on}$, and the inductor current $I_{PFC\_CCM}$ 32 increases through a primary stroke until reaching a peak corresponding to the transition to a secondary stroke. The duration of the primary stroke is the gate ON time indicated as $t_{on}$. After the gate of the converter switch 6 is switched off for the duration $t_{sec}$, the inductor current $I_{PFC\_CCM}$ 32 declines through the secondary stroke until the end of the period of the power cycle $t_{per}$ as defined by the primary stroke $t_{on}$ and the secondary stroke $t_{sec}$. In the CCM 31, the combined duration of the primary and secondary strokes corresponds to a total duration of a power stroke $t_{ps} = t_{on} + t_{sec}$ which is the same as the period of the power cycle $t_{per}$. The end of the second stroke corresponds to the beginning of the next period and the start of the next primary stroke. The period of operation corresponds to frequency in the range of 20KHz - 500KHz, but can be lower or higher, depending on the converter/application.

In the second depicted Boundary Conduction Mode (BCM) mode 33, the primary and secondary strokes are very similar except that the gate of the converter switch is only turned ON when the inductor current $I_{PFC\_BCM}$ 34 reaches zero. In particular, the start of a power phase in the BCM mode 33 begins when the inductor current $I_{PFC\_BCM}$ 34 reaches zero and the cycle-by-cycle controller turns the gate of the converter switch 6 to ON for the duration $t_{on}$. As depicted, the inductor current $I_{PFC\_BCM}$ 34 increases through a primary stroke until reaching a peak corresponding to the transition to a secondary stroke when the gate of the converter switch 6 is set to OFF. In response, inductor current $I_{PFC\_BCM}$ 34 decreases during the secondary stroke until a zero crossing is reached. In the BCM 33, the combined duration of the primary and secondary strokes $t_{on}$, $t_{sec}$ corresponds to a total duration of a power stroke $t_{ps}$ which is the same as the period of the power cycle $t_{per}$. The time period $t_{per}$ in BCM mode may be increased by increasing the ON time $t_{on}$ and thereby increasing the primary stroke. The secondary stroke will accordingly become longer as well. Increasing the time period $t_{per}$ also increases the inductor current as the current becomes higher during the primary stroke.

In the third depicted Discontinuous Conduction Mode (DCM) mode 34, the inductor current $I_{PFC\_DCM}$ 36 has a "dead" period where no power is delivered for the duration $t_{ring}$. This "dead" period is an added delay after the secondary stroke and before the next primary stroke. In the DCM mode 35, the first stroke begins at a (almost) zero inductor current crossing time when the cycle-by-cycle controller turns the gate of the converter switch 6 to ON for the duration $t_{on}$. The primary stroke extends through a current rise time until a peak inductor current $I_{PFC\_DCM}$ 36 is reached when the converter switch ON time is ended and the inductor current $I_{PFC\_DCM}$ 36 falls during the second stroke to a zero inductor current crossing. Instead of starting the next period at the end of this power phase, the converter switch 6 remains OFF for an additional time $t_{ring}$ during a ringing phase. The end of the ringing phase is the end of the period $t_{per}$ at which time the next power phase begins with another primary stroke by turning the converter switch 6 to ON with a drive signal from the cycle-by-cycle converter. As a result, the combined duration of the DCM primary and secondary strokes $t_{on}$, $t_{sec}$ corresponds to a total duration of a power stroke $t_{ps}$ which is shorter the period of the power cycle $t_{per}$.

As indicated above, there are several PFC circuit topologies that are widely used in the industry, but they are not all well suited for obtaining a measure of the PFC input current (Ipfc). For example, in the SMPS 10 depicted in Figure 1, the PFC input current (Ipfc) is flowing into the PFC boost converter 2 across the inductor L1 and is flowing back to the diode bridge rectifier 1 across the sense resistor (Rnsn). As a result, PFC input current can readily be obtained by measuring the SNSCUR voltage and dividing the result by the Rsns resistor value. The ability to measure the PFC input current (Ipfc) enables the SMPS 100 to have optimum power factor (PF) and total harmonic distortion (THD) performance for CCM, BCM, and DCM modes of operation.

In contrast, the SMPS 20 depicted in Figure 2 is not arranged to readily measure the PFC input current (Ipfc) because there is no sense resistor (Rsns) in the feedback to a diode bridge rectifier. For example, when the AC input voltage 21 is positive, the Ipfc current could be measured on the low side in the same way as in a PFC with the diode bridge. However, when AC input voltage 21 is negative, then the current needs to be measured on the high side (Vboost) and the shared Vs node becomes (nearly) equal to the output voltage (Vboost). As this voltage is typical around 400V, it cannot be measured easily anymore.

While some solutions have been proposed for measuring the PFC input current by using expensive current sensors (e.g., a Hall-effect current sensor or current transformer) which can work at high voltages as well and convert the sensed current to the controller, such solutions add to the cost and complexity. Another option is to avoid CCM operation and use "$t_{on}$ control" for DCM/QR operation, but this solution limits the operational modes by preventing CCM operation, and it reduces the PF/THD performance and/or power efficiency in case of valley switching (which occurs when the switches are turned ON when the voltage across the switch is at its minimum level, reducing capacitive switch-on losses).

As seen from the foregoing, there are conflicts and tradeoffs between providing a power efficient switched mode power supply (SMPS) that has optimum power factor (PF) and total harmonic distortion (THD) performance and can support CCM, BCM, and DCM modes of operation while accurately controlling the average current of the PFC boost converter circuit. To address the foregoing deficiencies and others known to those skilled in the art, there is disclosed herein a SMPS with a totem pole bridgeless power factor correcting (PFC) boost converter circuit, apparatus, system, and method of operation which uses integrated circuitry for measuring an PFC output current, an AC input voltage, and an output voltage, and for reconstructing an PFC input current from the PFC output current measurement, AC input voltage measurement, and output voltage measurement.

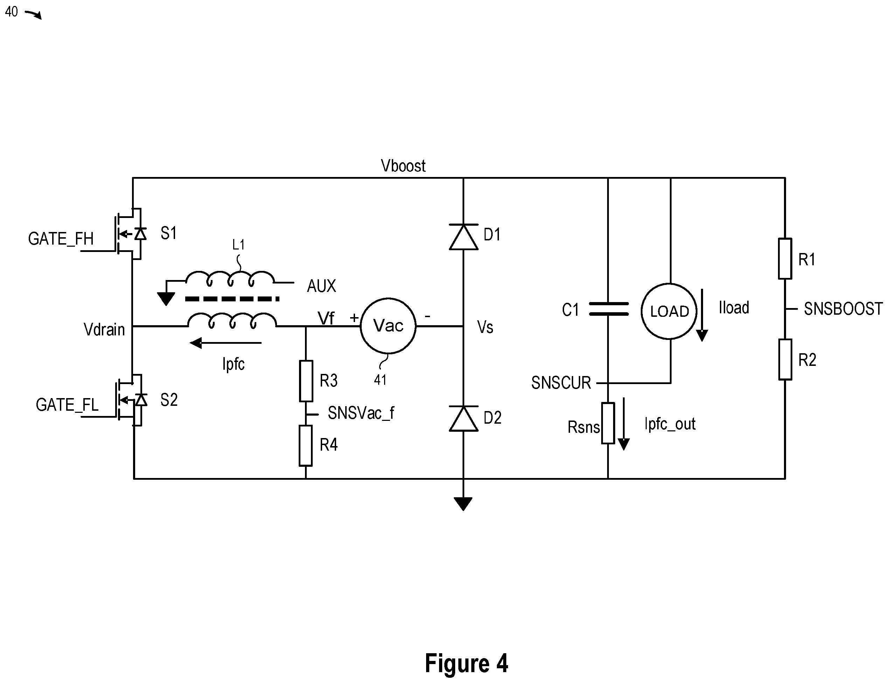

To provide an improved understanding of selected embodiments of the present disclosure, reference is now made to Figure 4 which depicts a schematic circuit diagram of a bridgeless PFC totem-pole boost converter 40 with integrated circuitry for measuring the PFC output current, an AC input voltage, and a PFC output voltage. As will be appreciated, the bridgeless PFC totem-pole boost converter 40 is similar to the bridgeless PFC totem-pole boost converter 20 depicted in Figure 3 in that it includes an AC input voltage 41 (a.k.a., mains input voltage), an inductor L1, at least two series-connected switching elements (S1, S2), driven by GATE_FH and GATE_FL to control the flow of current, series-connected diodes D1, D2, an output capacitance C1, and an output resistive divider R1, R2 connected as shown with the load connected in parallel with the output capacitance C1. In this configuration, the output resistive voltage divider R1, R2 may be used for providing a measure of the output voltage (Vboost) at the output voltage pin (SNSBOOST). In addition, the bridgeless PFC totem-pole boost converter 40 includes a second resistive voltage divider (R3, R4) connected between a first terminal of the AC input voltage 41 and ground for measuring the AC input voltage and polarity at the AC voltage fast leg sense pin (SNSVac_f). The bridgeless PFC totem-pole boost converter 40 also includes a sense resistor (Rsns) which may be connected as an external ballast resistor between the output capacitor C1 and ground for measuring the low side PFC output current (Ipfc_out) at the current sense node voltage pin (SNSCUR). In selected embodiments, the auxiliary winding (AUX) of the inductor L1 in the bridgeless PFC totem-pole boost converter 40 may be used to measure the high frequency (HF) part of the PFC input current (Ipfc) for improving the control loop phase margin.

As disclosed herein, the average PFC input current (Ipfc) cannot be directly measured in the bridgeless PFC totem-pole boost converter 40, but it can be directly or indirectly reconstructed by computing

$$I_{pfc} = \frac{Vboost}{Vin\_pfc} \cdot Ipfc\_out$$

. In selected direct measurement embodiments, the sense resistor (Rsns) may be used as a PFC output current measurement circuit to measure the PFC output current (Ipfc_out) at the current sense node voltage pin (SNSCUR) which is connected to the controller. And since the PFC input voltage (Vin_pfc) is approximately equal to Vf when the AC input voltage is positive (or approximately equal to Vboost-Vf when the AC input voltage is negative), the second resistive voltage divider (R3, R4) can be used as the AC input voltage measurement circuit to directly measure the AC input voltage at the AC fast leg voltage sense pin (SNSVac_f).

In selected indirect measurement embodiments, the average PFC input current (Ipfc) can be measured indirectly

$$I_{pfc} = \frac{Vboost}{Vin\_pfc} \cdot \quad Ipfc_{out} = \frac{t_{ps}}{t_{sec}} \cdot Ipfc\_out$$

using a timing measurement by computing , where $t_{ps}$ is the total duration of the primary and secondary stroke timing measurements (e.g., $t_{ps} = t_{on} + t_{sec}$) and where $t_{sec}$ is the duration of the secondary stroke timing measurement. In such embodiments, the PFC output current measurement circuit (Rsns) may be used to measure the PFC output current (Ipfc_out) at the current sense node voltage pin (SNSCUR) which is connected to the controller.

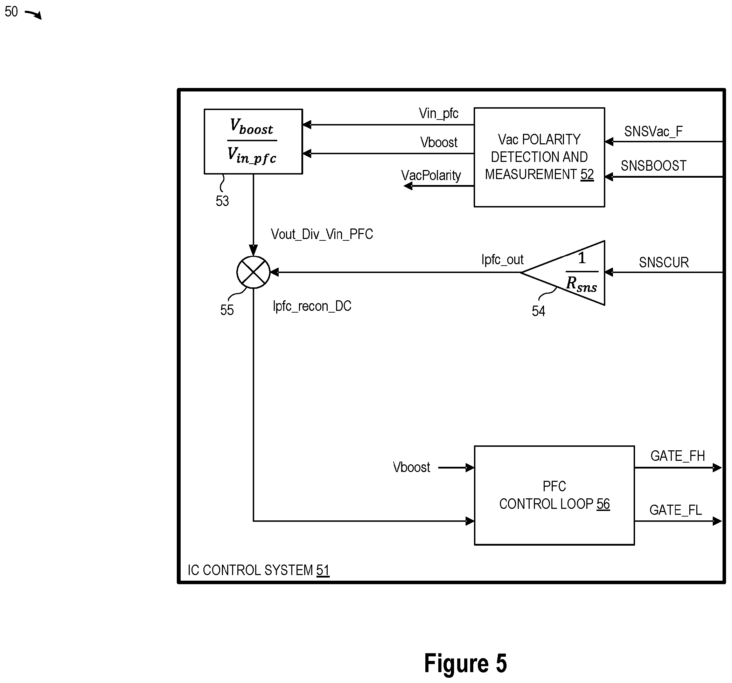

To provide an improved understanding of selected embodiments of the present disclosure, reference is now made to Figure 5 which depicts a simplified block diagram of an integrated circuit (IC) control system 51 for reconstructing the PFC input current from the measured PFC output current, AC input voltage, and output voltage. In selected embodiments, these values may be obtained using the bridgeless PFC totem-pole boost converter 40 depicted in Figure 4. In particular, the AC input voltage is provided as the SNSVac_F input to the IC control system 51 by using the second resistive voltage divider (R3, R4) to measure the voltage at the SNSVac_F pin. In addition, the output voltage (Vboost) is provided as the SNSBOOST input to the IC control system 51 by using the output resistive voltage divider (R1, R2) to measure the voltage at the SNSBOOST pin. While the voltage across the load is Vboost-$V_{SNSCUR}$, the $V_{SNSCUR}$ term may be neglected since $V_{SNSCUR}$ is much smaller than Vboost. The output voltage is measured directly via the resistive divider R1 and R2

At the IC control system 51, an AC input voltage polarity detector and measurement circuit 52 is connected to receive the AC input voltage (SNSVac _F) and output voltage (SNSBOOST). Based on these inputs, the AC input voltage polarity detector and measurement circuit 52 is configured to determine the polarity of the AC input voltage (VacPolarity), the boost voltage (Vboost) and the PFC input voltage (Vin_pfc). The PFC input voltage (Vin_pfc) is equal to Vf when the AC input voltage (Vac) is positive, and is equal to Vboost-Vf when the AC input voltage (Vac) is negative.

In addition, the IC control system 51 includes a first divider circuit 53 that is connected to receive the PFC input voltage (Vin_pfc) and boost voltage (Vboost). Based on these inputs, the first divider circuit 53 computes the quotient (Vboost/Vin_pfc) by dividing the output voltage (Vboost) by the PFC input voltage (Vin_pfc), thereby generating the output quotient (Vout_Div_Vin_PFC).

The IC control system 51 also includes a second divider circuit 54 that is connected to receive the voltage (SNSCUR) that is measured at the SNSCUR pin. Based on these inputs, the second divider circuit 54 is configured to compute the PFC output current (Ipfc_out) by dividing the SNSCUR pin voltage with the value of the sense resistor (Rsns).

In addition, the IC control system 51 includes a first multiplication circuit 55 that is connected to receive the output quotient (Vout_Div_Vin_PFC) and the PFC output current (Ipfc_out). Based on these inputs, the first multiplication circuit 55 is configured to compute the product

$$\text{Vout\_Div\_Vin\_PFC} \times \text{Ipfc\_out} = \frac{Vboost}{Vin\_pfc} \times Ipfc\_out = \text{Ipfc\_recon\_DC}$$

, which is the reconstructed DC input PFC current. The average value of the reconstructed PFC current (Ipfc_recon_DC) is equal to the average of the PFC coil current. The shape will be different.

The IC control system 51 also includes a PFC control loop 56 which is connected to receive the reconstructed PFC current (Ipfc_recon_DC) and the boost voltage (Vboost) from the AC input voltage polarity detector and measurement circuit 52. Based on these inputs, the PFC control loop 56 is configured to generate first and second gate drive signals GATE_FH, GATE, FL which are provided to the PFC boost controller for regulating the output voltage Vboost to a target value. To this end, the PFC control loop 56 may include any suitable voltage loop, current loop, and gate control circuitry, and the specific circuit details need not be specified since they are known to those skilled in the art.

As described hereinabove, the PFC output current (Ipfc_out) -- along with AC input voltage and the output voltage -- can be used to reconstruct the average PFC input current (Ipfc). However, phase margin of the controller may limit the effectiveness of this approach since, as the controller controls the switch elements (S1, S2), there is a delay between the measured PFC output current (Ipfc_out) and the moment the switching element gates switch OFF. As the measured output current is available after the switches are already switched off, the Ipfc_recon_DC is delayed compared to the actual PFC current. To avoid this drawback, the PFC input current (Ipfc) may be reconstructed by computing the integral of the voltage over the PFC inductor coil which is proportional to the current through the coil plus the DC current:

$$I_{pfc} = \frac{1}{L_{pfc}} \int V_{pfc\_coil} \cdot dt + I_{dc}.$$

As disclosed herein, the integral can be taken directly (Vpfc_coil = Vdrain-Vf) or indirectly via the integral of the AUX voltage from the inductor L1. The AUX signal can be measured during the primary and secondary stroke of the converter, resulting in the high frequency information of the PFC current. As will be appreciated, the DC information for the PFC input current (Ipfc) is missing from this signal, but the stability issues in the controller are solved by combining this result with the average PFC input current (Ipfc) that is reconstructed (Ipfc_recon_DC) from the measured PFC output current (Ipfc_out).

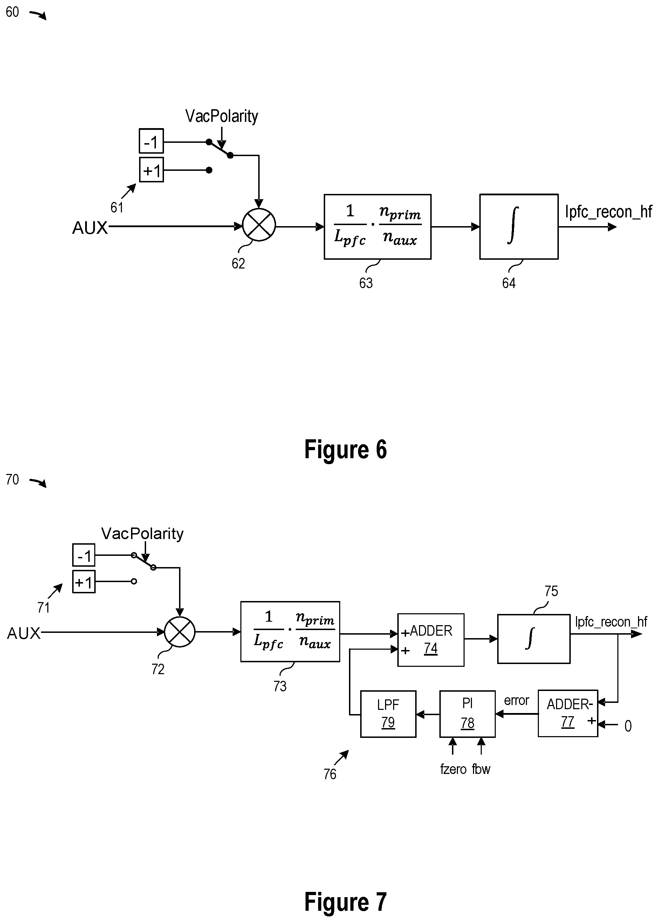

To provide an improved understanding of selected embodiments of the present disclosure, reference is now made to Figure 6 which depicts a simplified schematic block diagram of a control system 60 with circuitry for reconstructing high frequency information for the PFC input current. As depicted, the current control system 60 includes polarity circuitry 61, a first multiplication circuit 62, one or more second multiplication circuits 63, and an integration circuit 64 connected as shown to generate the reconstructed HF PFC input current (Ipfc_recon_hf). In particular, the polarity circuitry 61 compensates for the polarity of the input AC voltage (VacPolarity). At the first multiplication circuit 62, the polarity of the input AC voltage (VacPolarity) is applied to the received auxiliary voltage (AUX) from the inductor in the PFC boost converter. The AUX voltage is a representation of the PFC coil voltage (Vf-Vdrain). However, the actual voltage depends on the winding ratio of the transformer ($n_{aux}/n_{prim}$), where $n_{aux}$ is the number of turns for the auxiliary and $n_{prim}$ is the number of turns for the primary in the PFC inductor L1. To this end, the output from the first multiplication circuit 62 is provided to one or more second multiplication circuits 63 which multiply the AUX voltage with the quotient $n_{aux}/n_{prim}$ to obtain a first product. In addition, the second multiplication circuit 63 multiplies the first product by the term 1/Lpfc to obtain a second product which is then integrated by the integration circuit 64 to obtain the reconstructed HF input PFC current (Ipfc_recon_hf). As will be appreciated, the reconstructed HF part of the PFC coil current does not include the DC information for the input PFC current. In addition, it will be appreciated that the reconstructed HF input PFC current (Ipfc_recon_hf) would drift away to +/- infinity in the event of any offset error in the AUX voltage measurement. To avoid offset error drift, a DC loop can be added to the current control circuit 60 to regulate the DC information to zero.

To provide an improved understanding of selected embodiments of the present disclosure, reference is now made to Figure 7 which depicts a simplified schematic block diagram of a control system 70 having a DC regulation control loop for reconstructing high frequency information for the PFC input current. As depicted, the control system 70 is similar to the current control system 60 shown in Figure 6, in that it includes polarity circuitry 71, a first multiplication circuit 72, one or more second multiplication circuits 73, and an integration circuit 75, but there is also a DC regulation control loop 76 connected in feedback between the integration circuit 75 and a first adder 74 which is inserted between the one or more second multiplication circuits 73 and the integration circuit 75. In particular, the polarity circuitry 71 compensates for the polarity of the input AC voltage (VacPolarity). At the first multiplication circuit 72, the polarity of the input AC voltage (VacPolarity) is applied to the received auxiliary voltage (AUX) from the inductor in the PFC boost converter. At the one or more second multiplication circuits 73, the output from the first multiplication circuit 72 is multiplied with the quotient $n_{aux}/n_{prim}$ to obtain a first product, and is also multiplied by the term 1/Lpfc to generate and output a combined product. At the first adder 74, the first product is received at a first non-inverting input of the first adder 74, and is added to an output from the DC regulation control loop 76 which is received at a second non-inverting input of the first adder 74. The output from the first adder 74 is then integrated by the integration circuit 75 to generate the reconstructed HF input PFC current (Ipfc_recon_hf).

To prevent offset error drift, the DC regulation control loop 76 is connected to include a second adder 77, a proportional-integral (PI) controller 78, and a low pass filter (LPF) 79 which are connected to receive the reconstructed HF input PFC current (Ipfc_recon_hf) and a "0" at the second adder 77. The addition output from the second adder 77 provides an "error" signal of the DC loop which is input to the PI controller 78. The PI controller 78 can be configured with two constant input values: a zero value (fzero) to obtain enough phase margin, and a bandwidth value (fbw). The bandwidth value (fbw) sets the gain of the PI controller 78 to provide a predefined bandwidth of the DC loop. As the bandwidth is limited, the low pass filter 79 can be added to the loop to further filter out high frequency noise.

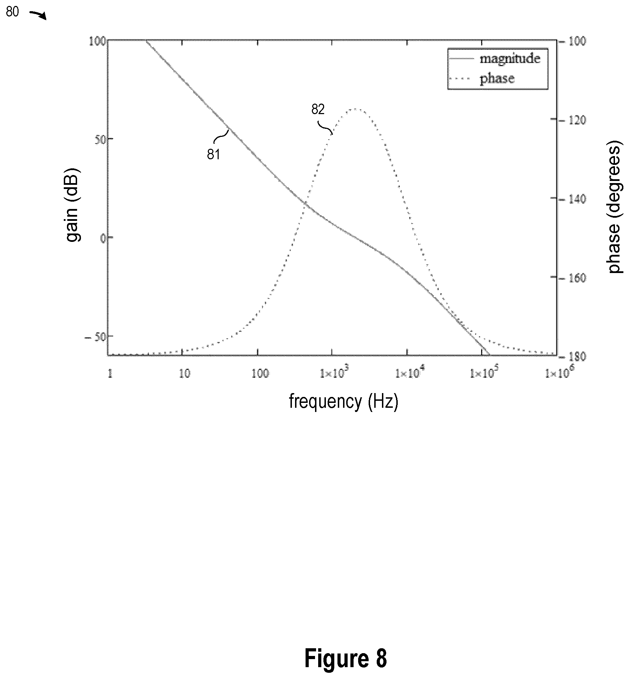

For an improved understanding of selected embodiments of the present disclosure, reference is now made to Figure 8 which depicts a bode plot of a gain phase calculation of the PFC boost converter with a current control circuit having a DC regulation control loop. The gain and phase are indicated on the vertical axes, and frequency is indicated on the horizontal axis. The first curve line 81 shows gain and the second curve line 82 shows the related phase. The magnitude curve line 81 shows a regular progression of increasing gain as the frequency diminishes, but the phase curve line 82 has a gain and phase that peak at approximately 2000Hz and drop at higher and lower frequencies, with a zero at 500Hz, a loop bandwidth of 2KHz and a pole at 38KHz.

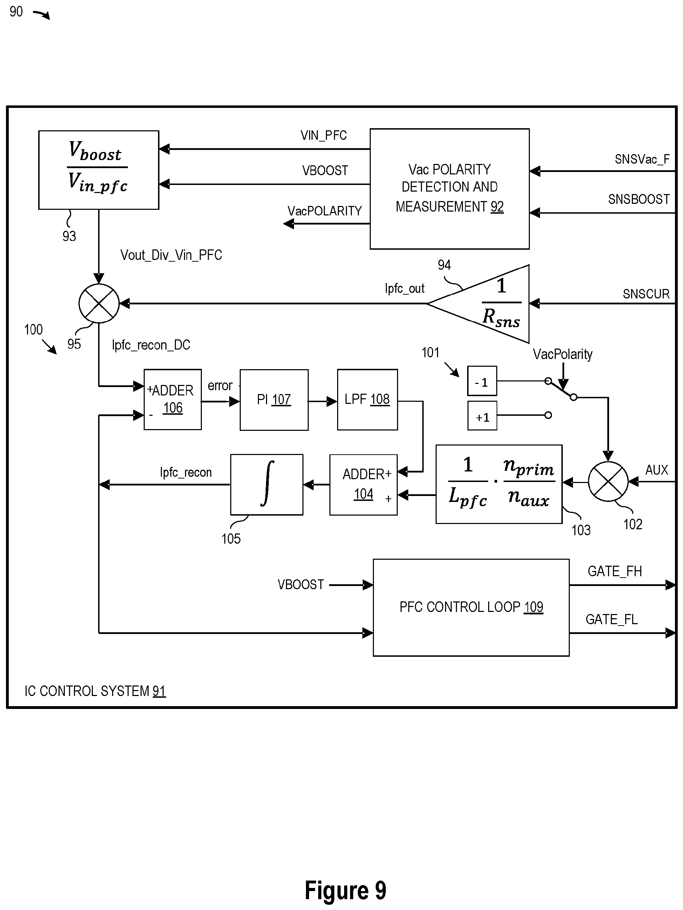

In accordance with selected embodiments of the present disclosure, the DC control loop can also be applied to regulate the DC current (Ipfc_recon) to the reconstructed average PFC input current (Ipfc_recon_dc) instead of "0" while the HF part of the current is measured via the integral of the AUX voltage. To provide an improved understanding of selected embodiments of the present disclosure, reference is now made to Figure 9 which depicts a simplified block diagram 90 of a bridgeless PFC totem-pole boost converter 90 having an IC control system 91 which combines the control system 70 logic of Figure 7 with the integrated circuit (IC) control system 51 of Figure 5 to reconstruct the PFC input current from the measured PFC output current, AC input voltage, and output voltage. In selected embodiments, these values may be obtained using the bridgeless PFC totem-pole boost converter 40 depicted in Figure 4. In particular, the AC input voltage is provided as the SNSVac_F input to the IC control system 91 by using the second resistive voltage divider (R3, R4) to measure the voltage at the SNSVac_F pin. In addition, the output voltage (Vboost) is provided as the SNSBOOST input to the IC control system 91 by using the output resistive voltage divider (R1, R2) to measure the voltage at the SNSBOOST pin. In addition, the sense resistor voltage is provided as the SNSCUR input to the IC control system 91 by using the sense resistor (Rsns) to measure the voltage at the SNSCUR pin. Finally, the auxiliary voltage (AUX) is provided as the AUX input to the IC control system 91 by measuring the voltage crop across the grounded auxiliary winding of the inductor L1.

At the IC control system 91, the AC input voltage polarity detector and measurement circuit 92, first divider circuit 93, second divider circuit 94, and first multiplication circuit 95 operate in the same way as described above with reference to Figure 5 to generate and multiple the output quotient (Vout_Div_Vin_PFC) and the PFC output current (Ipfc_out) to

$$\text{Vout\_Div\_Vin\_PFC x Ipfc\_out} = \frac{Vboost}{Vin\_pfc} \times Ipfc\_out = \text{Ipfc\_recon\_DC}$$

compute the product , which is the average value of the reconstructed PFC current. However, instead of regulating this value to "0," the DC control loop 100 is connected to regulate the DC current to the Ipfc_recon_dc instead of "0." To this end, the IC control system 91 includes a DC regulation control loop 100 which regulates the DC or average current (Ipfc_recon signal) to the reconstructed average PFC input current (Ipfc_recon_dc). As depicted, the DC regulation control loop 100 includes polarity circuitry 101, a first multiplication circuit 102, one or more second multiplication circuits 103, a first adder 104, an integration circuit 105, and a DC regulation control loop 106-108 connected in feedback between the integration circuit 105 and the first adder104, connected as shown. In operation, the polarity circuitry 101 compensates for the polarity of the input AC voltage (VacPolarity). At the first multiplication circuit 102, the polarity of the input AC voltage (VacPolarity) is applied to the received auxiliary voltage (AUX) from the inductor in the PFC boost converter. At the one or more second multiplication circuits 103, the output from the first multiplication circuit 102 is multiplied with the quotient $n_{aux}/n_{prim}$ to obtain a first product, and is also multiplied by the term 1/Lpfc to generate and output a combined product. At the first adder 104, the first product is received at a first non-inverting input for addition with an output from the DC regulation control loop 106-108 which is received at a second non-inverting input. The output from the first-adder 104 is then integrated by the integration circuit 105 to generate the reconstructed PFC current (Ipfc_recon).

To prevent offset error drift, the DC regulation control loop 106-108 is connected to include a second adder/subtractor 106, a proportional-integral (PI) controller 107, and a low pass filter (LPF) 108 which are connected to compare the reconstructed input PFC current (Ipfc_recon) with the reconstructed average PFC input current (Ipfc_recon_dc) at the second adder/subtractor 106. The subtraction output from the second adder/subtractor 106 provides an "error" signal of the DC loop which is input to the PI controller 107 which generates an output that can be filtered by the low pass filter 108 to further filter out high frequency noise.

The IC control system 91 also includes a PFC control loop 109 which is connected to receive the reconstructed input PFC current (Ipfc_recon) and the boost voltage (Vboost) from the AC input voltage polarity detector and measurement circuit 102. Based on these inputs, the PFC control loop 109 is configured to generate first and second gate drive signals GATE_FH, GATE, FL which are provided to the PFC boost controller for regulating the output voltage Vboost to a target value. To this end, the PFC control loop 109 may include any suitable voltage loop, current loop, and gate control circuitry, and the specific circuit details need not be specified since they are known to those skilled in the art.

As described hereinabove, the present disclosure provides a totem pole bridgeless power factor correcting (PFC) boost converter and method of operation for reconstructing an average PFC input current from a PFC output current measurement, an AC input voltage measurement, and an output voltage measurement. In addition to using the average output current through a shunt resistor to reconstruct the PFC input current with reduced noise sensitivity, the disclosed circuit and methodology uses an auxiliary inductor winding to reduce the phase shift in the measurement. This works also in DCM and QR operation. In addition, the AC input (mains) voltage and output boost voltage are measured to reconstruct the average PFC input current without requiring expensive current sensors or current transformers.

By now, it should be appreciated that there has been provided a power factor correction (PFC) boost converter system, apparatus, circuit, and associated method of operation. In the disclosed PFC boost converter system, a PFC converter is connected to generate a boosted output voltage developed over an output load using an inductor that is actively switched between first and second terminals of an AC input voltage. In selected embodiments, the PFC converter is a bridgeless PFC converter. In addition, a sense resistor circuit is connected to the PFC converter between the output load and ground for measuring a first voltage from the sense resistor circuit. In selected embodiments, the sense resistor circuit is an external low-ohmic shunt resistor connected between the output load and ground. In addition, a first voltage measurement divider circuit (e.g., a voltage divider circuit) is connected to the PFC converter between the boosted output voltage and ground for measuring a second voltage. In addition, a second voltage measurement circuit (e.g., a voltage divider circuit) is connected to the PFC converter between the first terminal of the AC input voltage and ground for measuring a third voltage. In addition, a control system is connected to the PFC converter to receive the first, second, and third voltages, where the control system is configured to compute a reconstructed PFC input current signal from the first, second, and third voltages and to output a set of control signals for controlling the PFC converter based on the reconstructed PFC input current signal and the boosted output voltage. In selected embodiments, the control system processes the first voltage to determine a PFC output current value. In addition, the control system processes the second voltage to determine a boosted output voltage value. In addition, the control system processes the third voltage to determine a PFC input voltage value. In addition, the control system is configured to compute the reconstructed PFC input current signal by dividing the boosted output voltage by the PFC input voltage value to form a quotient that is multiplied by the PFC output current value. In selected embodiments, the control system also includes a polarity detector that receives the third voltage and generates a polarity signal that indicates a polarity of the AC input voltage. In such embodiments, the control system may include a DC regulation control loop that is connected to receive the polarity signal and a voltage measured directly or indirectly from the inductor, where the DC regulation control loop regulates the reconstructed PFC input current signal to a predetermined target value. In selected embodiments, the control system is configured to compute a low frequency component of the reconstructed PFC input current signal by processing the first voltage to determine a PFC output current value, processing the second voltage to determine a boosted output voltage value, processing the third voltage to determine a PFC input voltage value, dividing the boosted output voltage by the PFC input voltage to form a quotient, and multiplying the quotient by the PFC output current value to compute the low frequency component of the reconstructed PFC input current signal. In other embodiments, the control system is configured to compute a high frequency component of the reconstructed PFC input current signal based on a voltage measured directly or indirectly from the inductor.

In another form, there has been provided a PFC system, apparatus, circuit, and associated method of operation. The disclosed PFC system includes a PFC converter circuit connected and configured to generate a boosted output voltage developed over an output load using an inductor that is actively switched between first and second terminals of a power supply voltage by first and second switching elements. In addition, the disclosed PFC system includes a first voltage measurement circuit connected between the output load and ground for measuring a first voltage. In selected embodiments, the first voltage measurement circuit is a shunt resistor circuit connected between the output load and ground for measuring the first voltage. The disclosed PFC system also includes a second voltage measurement circuit connected between the boosted output voltage and ground for measuring a second voltage. In addition, the disclosed PFC system includes a third voltage measurement circuit connected between the first terminal of the AC input voltage and ground for measuring a third voltage. In selected embodiments, the second and third voltage measurement circuits are each a voltage divider circuit. The disclosed PFC system also includes a PFC control system connected and configured to receive the first, second, and third voltages and to compute a reconstructed PFC input current signal from the first, second, and third voltages. In addition, the disclosed PFC system includes a PFC control loop circuit connected and configured to receive the reconstructed PFC input current signal and the boosted output voltage and to generate a set of control signals for controlling the first and second switching elements. In selected embodiments, the PFC control system includes a first measurement and computation circuit that is connected to receive the second and third voltages, and is configured to generate a polarity signal to indicate a polarity of the AC input voltage, a boosted output voltage value, and a PFC input voltage value. In addition, the PFC control system includes a second measurement and computation circuit that is connected to receive the first voltage, and is configured to generate a PFC output current value. In addition, the PFC control system includes a third computation circuit that is connected to receive the boosted output voltage value and the PFC input voltage value, and is configured to generate a first quotient value of boosted output voltage value divided by the PFC input voltage value. In addition, the PFC control system includes a fourth computation circuit that is connected to receive the first quotient value and the PFC output current, and is configured to generate reconstructed PFC input current signal. In such embodiments, the disclosed PFC system may also include a DC regulation control loop that is connected to receive the polarity signal and an auxiliary voltage measured from the inductor, where the DC regulation control loop regulates the reconstructed PFC input current signal to a predetermined target value. In selected embodiments, the PFC control system is configured to compute a low frequency component of the reconstructed PFC input current signal by processing the first voltage to determine a PFC output current value, processing the second voltage to determine a boosted output voltage value, processing the third voltage to determine a PFC input voltage value, dividing the boosted output voltage value by the PFC input voltage value to form a quotient, and multiplying the quotient by the PFC output current value to compute the low frequency component of the reconstructed PFC input current signal. In such embodiments, the PFC control system may also be configured to compute a high frequency component of the reconstructed PFC input current signal based on an auxiliary voltage measured from the inductor. In other selected embodiments, the PFC control system is configured to process the first voltage to determine a PFC output current value, and to compute the reconstructed PFC input current signal by dividing a first timing duration value $t_{ps}$ by a second timing duration value $t_{sec}$ to form a quotient that is multiplied by the PFC output current value, where the first timing duration value $t_{ps}$ specifies a total duration of primary and secondary stroke timing measurements for the set of control signals for controlling the first and second switching elements, and where the second timing duration value $t_{sec}$ specifies a total duration of the secondary stroke timing measurement for the set of control signals for controlling the first and second switching elements.

Although the described exemplary embodiments disclosed herein are directed to various PFC boost converter circuits and methods of operation for reconstructing an average PFC input current from a PFC output current measurement, an AC input voltage measurement, and an output voltage measurement, the present invention is not necessarily limited to the example embodiments which illustrate inventive aspects of the present invention that are applicable to a wide variety of PFC boost converter circuit configurations. Thus, the particular embodiments disclosed above are illustrative only and should not be taken as limitations upon the present invention, as the invention may be modified and practiced in different but equivalent manners apparent to those skilled in the art having the benefit of the teachings herein. Accordingly, the foregoing description is not intended to limit the invention to the particular form set forth, but on the contrary, is intended to cover such alternatives, modifications and equivalents as may be included within the spirit and scope of the invention as defined by the appended claims so that those skilled in the art should understand that they can make various changes, substitutions and alterations without departing from the spirit and scope of the invention in its broadest form.

The connections as discussed herein may be any type of connection suitable to transfer signals or power from or to the respective nodes, units, or devices, including via intermediate devices. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, a plurality of connections may be replaced with a single connection that transfers multiple signals serially or in a time multiplexed manner. Likewise, single connections carrying multiple signals may be separated out into various different connections carrying subsets of these signals. The term "coupled" or similar language may include a direct physical connection or a connection through other intermediate components even when those intermediate components change the form of coupling from source to destination.

The described examples may be implemented on a single integrated circuit, for example in software in a digital signal processor (DSP) as part of a radio frequency integrated circuit (RFIC). Alternatively, the circuit and/or component examples may be implemented as any number of separate integrated circuits or separate devices interconnected with each other in a suitable manner. These examples may alternatively be implemented as soft or code representations of physical circuitry or of logical representations convertible into physical circuitry, such as in a hardware description language of any appropriate type.

Boundaries between the above-described operations are provided as examples. Multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer-useable storage medium for execution by a computer. As an example, an embodiment of a computer program product includes a computer-useable storage medium to store a computer readable program.

Alternatively, embodiments of the invention may be implemented entirely in hardware or in an implementation containing both hardware and software elements. In embodiments which use software, the software may include but is not limited to firmware, resident software, microcode, etc.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

**Claims**

1. A power factor correction (PFC) boost converter system comprising:

a PFC converter that is connected to generate a boosted output voltage developed over an output load using an inductor that is actively switched between first and second terminals of an AC input voltage;
a sense resistor circuit connected to the PFC converter between the output load and ground for measuring a first voltage from the sense resistor circuit;
a first voltage measurement circuit connected to the PFC converter between the boosted output voltage and ground for measuring a second voltage;
a second voltage measurement circuit connected to the PFC converter between the first terminal of the AC input voltage and ground for measuring a third voltage; and
a control system connected to the PFC converter to receive the first, second, and third voltages, where the control system is configured to compute a reconstructed PFC input current signal from the first, second, and third voltages and to output a set of control signals for controlling the PFC converter based on the reconstructed PFC input current signal and the boosted output voltage.

2. The PFC boost converter system of claim 1, where the control system processes the first voltage to determine a PFC output current value.

3. The PFC boost converter system of claim 2, where the control system processes the second voltage to determine a boosted output voltage value.

4. The PFC boost converter system of claim 3, where the control system processes the third voltage to determine a PFC input voltage value.

5. The PFC boost converter system of claim 4, where the control system is configured to compute the reconstructed PFC input current signal by dividing the boosted output voltage value by the PFC input voltage value to form a quotient that is multiplied by the PFC output current value.

6. The PFC boost converter system of any preceding claim, where the sense resistor circuit comprises an external low-ohmic shunt resistor connected between the output load and ground.

7. The PFC boost converter system of any preceding claim, where the control system comprises a polarity detector that receives the third voltage and generates a polarity signal that indicates a polarity of the AC input voltage.

8. The PFC boost converter system of claim 7, where the control system comprises a DC regulation control loop that is connected to receive the polarity signal and a voltage measured directly or indirectly from the inductor, where the DC regulation control loop regulates the reconstructed PFC input current signal to a predetermined target value.

9. The PFC boost converter system of any preceding claim, where the control system is configured to compute a low frequency component of the reconstructed PFC input current signal by processing the first voltage to determine a PFC output current value, processing the second voltage to determine a boosted output voltage value, processing the third voltage to determine a PFC input voltage value, dividing the boosted output voltage value by the PFC input voltage value to form a quotient, and multiplying the quotient by the PFC output current value to compute the low frequency component of the reconstructed PFC input current signal.

10. The PFC boost converter system of claim 9, where the control system is configured to compute a high frequency component of the reconstructed PFC input current signal based on a voltage measured directly or indirectly from the inductor.

11. The PFC boost converter system of any preceding claim, where the PFC converter is a bridgeless PFC converter.

12. The PFC boost converter system of any preceding claim, where the first voltage measurement circuit is a voltage divider circuit.

13. The PFC boost converter system of any preceding claim, where the second voltage measurement circuit is a voltage divider circuit.

**Figure 1**

EP 4 668 559 A1

**Figure 2**

EP 4 668 559 A1

Figure 3

Figure 4

$$\frac{V_{boost}}{V_{in\_pfc}}$$

53

Vin_pfc

Vboost

Vac POLARITY
DETECTION AND
MEASUREMENT 52

VacPolarity

SNSVac_F

SNSBOOST

Vout_Div_Vin_PFC

Ipfc_out

$$\frac{1}{R_{sns}}$$

SNSCUR

55

Ipfc_recon_DC

54

Vboost

PFC
CONTROL LOOP 56

GATE_FH

GATE_FL

IC CONTROL SYSTEM 51

50

17

**Figure 5**

60

VacPolarity

-1

+1

61

AUX

62

$$\frac{1}{L_{pfc}} \cdot \frac{n_{prim}}{n_{aux}}$$

63

$$\int$$

64

Ipfc_recon_hf

## Figure 6

70

VacPolarity

-1

+1

71

AUX

72

$$\frac{1}{L_{pfc}} \cdot \frac{n_{prim}}{n_{aux}}$$

73

+ADDER

+ 74

75

$$\int$$

Ipfc_recon_hf

LPF
79

PI
78

error

ADDER-
77    +

0

76

fzero fbw

## Figure 7

Figure 8

90

$$\frac{V_{boost}}{V_{in\_pfc}}$$

93

VIN_PFC

VBOOST

VacPOLARITY

Vac POLARITY DETECTION AND MEASUREMENT 92

SNSVac_F

SNSBOOST

Vout_Div_Vin_PFC

100

95

Ipfc_recon_DC

94

Ipfc_out

$$\frac{1}{R_{sns}}$$

SNSCUR

VacPolarity

101

-1

+1

+ADDER 106

error

PI 107

LPF 108

Ipfc_recon

∫

ADDER+ 104 +

$$\frac{1}{L_{pfc}} \cdot \frac{n_{prim}}{n_{aux}}$$

103

102

AUX

105

VBOOST

PFC CONTROL LOOP 109

GATE_FH

GATE_FL

IC CONTROL SYSTEM 91

**Figure 9**

Europäisches
Patentamt

European
Patent Office

Office européen
des brevets

# EUROPEAN SEARCH REPORT

**Application Number**

EP 25 18 1968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2022 050131 A (PANASONIC CORP) 30 March 2022 (2022-03-30) * paragraph [0063] - paragraph [0083] * * paragraph [0121] - paragraph [0124] * * figure 20 * | 1-13 | INV. H02M1/00 H02M1/42 |
| A | JP 4 591007 B2 (DAIKIN IND LTD) 1 December 2010 (2010-12-01) * paragraph [0006] * | 1-13 | |
| A | US 2022/060117 A1 (MATSUI KOTA [JP]) 24 February 2022 (2022-02-24) * paragraph [0040] - paragraph [0057] * | 1-13 | |
| A | US 2023/016789 A1 (BARRY BRENDAN [US]) 19 January 2023 (2023-01-19) * paragraphs [0020], [0027] * * figures 1,2 * | 8,10 | |

**TECHNICAL FIELDS SEARCHED (IPC)**

H02M

The present search report has been drawn up for all claims

| Place of search | Date of completion of the search | Examiner |
|---|---|---|
| The Hague | 8 October 2025 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 1968

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2025

| Patent document cited in search report | | Publication date | Patent family member(s) | | Publication date |
|---|---|---|---|---|---|
| JP 2022050131 | A | 30-03-2022 | JP | 7495311 B2 | 04-06-2024 |
| | | | JP | 2022050131 A | 30-03-2022 |
| JP 4591007 | B2 | 01-12-2010 | JP | 4591007 B2 | 01-12-2010 |
| | | | JP | 2006094596 A | 06-04-2006 |
| US 2022060117 | A1 | 24-02-2022 | CN | 114094851 A | 25-02-2022 |
| | | | JP | 6983289 B1 | 17-12-2021 |
| | | | JP | 2022036422 A | 08-03-2022 |
| | | | US | 2022060117 A1 | 24-02-2022 |
| US 2023016789 | A1 | 19-01-2023 | EP | 4371226 A1 | 22-05-2024 |
| | | | TW | 202320459 A | 16-05-2023 |
| | | | US | 2023016789 A1 | 19-01-2023 |
| | | | WO | 2023287354 A1 | 19-01-2023 |

EPO FORM P0459

For more details about this annex : see Official Journal of the European Patent Office, No. 12/82